# EUROPEAN PATENT APPLICATION

(11) **EP 4 749 147 A1**
(43) Date of publication of application: **27.05.2026**
(21) Application number: 24842950.8
(22) Date of filing: 04.07.2024
(51) Int. Cl.: F16C 17/02, F16B 5/02

(54) **SLIDE BEARING AND PUMP DEVICE**

(30) Priority: 20.07.2023 JP 2023118428
(71) Applicant: EBARA CORPORATION, Ota-ku, Tokyo 144-8510 (JP)
(72) Inventor: KIKUCHI, Hyuga, Tokyo 144-8510 (JP); WATAJI, Kei, Tokyo 144-8510 (JP); IKEDA, Hayato, Tokyo 144-8510 (JP); SUZUKI, Asaki, Tokyo 144-8510 (JP); HONDA, Shuichiro, Tokyo 144-8510 (JP); ITAZAWA, Mao, Tokyo 144-8510 (JP); HAYAKAWA, Junichi, Tokyo 144-8510 (JP)
(74) Representative: Wagner & Geyer
(86) International application number: PCT/JP2024/024184
(87) International publication number: WO 2025/018157

(57) **Abstract**

The present invention relates to a plain bearing for use in a rotary machine, such as pump or turbine, and particularly to a plain bearing for use in cryogenic environment. The plain bearing includes a sliding contact pad (1) having a shaft support surface (1a) for supporting an outer circumferential surface of a rotational shaft (100), a shell (2) disposed radially outward of the sliding contact pad (1), and a pad-pressing mechanism (3)that presses the sliding contact pad (1) against a pad support surface (2a) of the shell (2) when the sliding contact pad (1) contracts.

## Description

### Technical Field

The present invention relates to a plain bearing for use in a rotary machine, such as pump or turbine, and more particularly to a plain bearing for use in a cryogenic environment. The present invention further relates to a pump apparatus having such a plain bearing.

### Background Art

A rotary machine generally has a bearing to support a rotational shaft. A rotary machine that handles fluid, such as pump or turbine, may have a plain bearing. The plain bearing includes a sliding contact pad that makes sliding contact with a rotational shaft and a metal shell arranged outside of the sliding contact pad. The sliding contact pad is held by the shell. When the rotary machine is in operation, the fluid comes into contact with the plain bearing and acts as a lubricant for the plain bearing.

The sliding contact pad is made of a resin material having a low coefficient of dynamic friction. However, when the fluid in contact with the plain bearing is a cryogenic fluid, such as liquid hydrogen, the sliding contact pad contracts more than the shell due to a difference in coefficient of linear expansion between the resin sliding contact pad and metal materials including the shell and fixing members. As a result, a load pressing the sliding contact pad against the shell decreases. In the worst case, the sliding contact pad may separate from the shell.

### Citation List

### Patent Literature

Patent document 1: Japanese laid-open patent publication No. 2022-188902

### Summary of Invention

### Technical Problem

The present invention relates to a plain bearing for use in a rotary machine, such as pump or turbine, and provides a plain bearing that eliminates an effect of a difference in coefficient of linear expansion between sliding contact pad and shell and can operate in an extremely low temperature environment. The present invention further provides a pump apparatus having such a plain bearing.

### Solution to Problem

In an embodiment, there is provided a plain bearing for supporting a rotational shaft, comprising: a sliding contact pad having a shaft support surface configured to support an outer circumferential surface of the rotational shaft; a shell arranged radially outward of the sliding contact pad; and a pad-pressing mechanism configured to press the sliding contact pad against the pad support surface of the shell when the sliding contact pad contracts.

In an embodiment, the pad-pressing mechanism includes a biasing member that biases the sliding contact pad toward the shell.

In an embodiment, the pad-pressing mechanism further includes a pad supporting member supported by the shell, the sliding contact pad is supported by the pad supporting member, and the biasing member biases the sliding contact pad and the pad supporting member toward the shell to press the sliding contact pad against the pad support surface of the shell.

In an embodiment, the pad-pressing mechanism comprises: a pad supporting member fixed to the shell and having a tapered shaft portion; and a tapered hole formed in the sliding contact pad, wherein the sliding contact pad is supported by the tapered shaft portion, and the tapered hole is in surface contact with an outer circumferential surface of the tapered shaft portion.

In an embodiment, the pad-pressing mechanism includes: a dovetail groove formed in the sliding contact pad; and a pad holding rail coupled to the pad support surface of the shell, the pad holding rail having an inverted triangular cross-sectional shape that fits in the dovetail groove.

In an embodiment, the dovetail groove and the pad retaining rail extend in an axial direction parallel to a central axis of the plain bearing.

In an embodiment, the plain bearing further comprises a biasing member that presses the sliding contact pad in the axial direction.

In an embodiment, there is provided a pump apparatus comprising: a rotational shaft; an electric motor configured to rotate the rotational shaft; an impeller fixed to the rotational shaft; a pump casing that houses the impeller therein; and the plain bearing configured to rotatably support the rotational shaft.

### Advantageous Effects of Invention

The pad-pressing mechanism is configured to press the sliding contact pad against the pad support surface of the shell when the sliding contact pad contracts due to contact with a cryogenic fluid (for example, a liquefied gas, such as liquid hydrogen). As a result, the sliding contact pad is firmly held on the shell, allowing the plain bearing to maintain its stable operation even in a cryogenic environment.

### Brief Description of Drawings

[FIG. 1] FIG. 1 is a horizontal cross-sectional view showing an embodiment of a plain bearing;
[FIG. 2] FIG. 2 is a vertical cross-sectional view of the plain bearing shown in FIG. 1;
[FIG. 3] FIG. 3 is an enlarged cross-sectional view showing a sliding contact pad and a pad-pressing mechanism;
[FIG. 4] FIG. 4 is a diagram showing an example of a state in which the sliding contact pad has contracted;
[FIG. 5] FIG. 5 is a horizontal cross-sectional view showing another embodiment of the plain bearing;
[FIG. 6] FIG. 6 is a diagram showing an example of a state in which the sliding contact pad has contracted;
[FIG. 7] FIG. 7 is a horizontal cross-sectional view showing still another embodiment of the plain bearing;
[FIG. 8] FIG. 8 is a perspective view showing an embodiment of the sliding contact pad;
[FIG. 9] FIG. 9 is a perspective view showing a part of an embodiment of a shell;
[FIG. 10] FIG. 10 is a diagram showing an example of a state in which the sliding contact pad has contracted;
[FIG. 11] FIG. 11 is a vertical cross-sectional view of the embodiment of the plain bearing shown in FIG. 7;
[FIG. 12] FIG. 12 is a diagram showing an example of a state in which the sliding contact pad has contracted; and
[FIG. 13] FIG. 13 is a cross-sectional view showing an embodiment of a pump apparatus having a plain bearing.

### Description of Embodiments

Embodiments of the present invention will be described below with reference to the drawings. Embodiments of a plain bearing described below are suitable for use in supporting a rotational shaft of a rotary machine (such as, a liquid pump or turbine). In particular, the plain bearing according to the embodiments described below is suitable for use as a bearing that supports a rotational shaft of a rotary machine used to deliver cryogenic liquefied gas, such as liquefied ammonia, liquid hydrogen, liquid nitrogen, liquefied natural gas, liquefied ethylene gas, and liquefied petroleum gas.

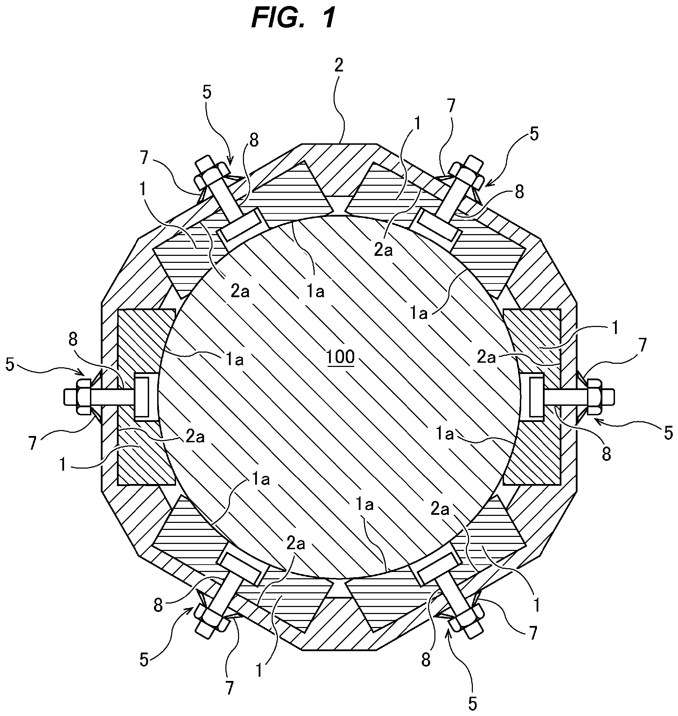

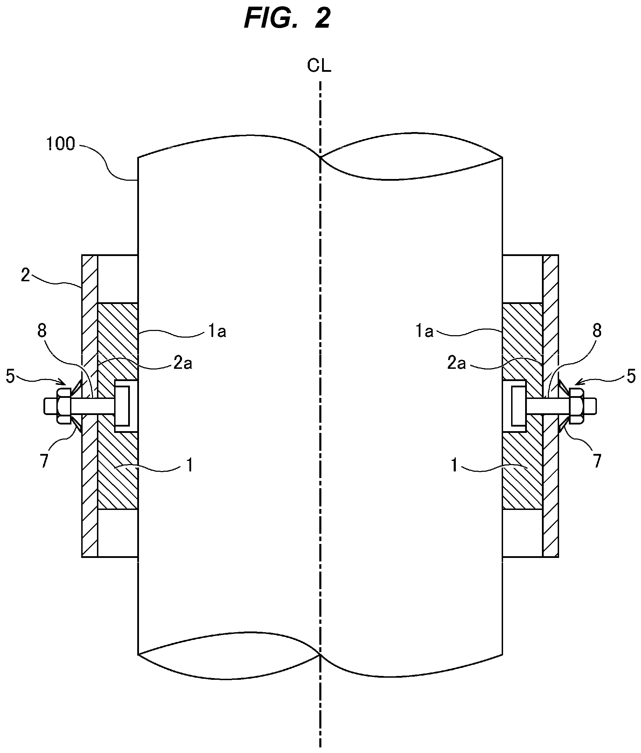

FIG. 1 is a horizontal cross-sectional view showing an embodiment of a plain bearing, and FIG. 2 is a vertical cross-sectional view of the plain bearing shown in FIG. 1. The plain bearing includes a plurality of sliding contact pads 1 having a plurality of shaft support surfaces 1a for supporting an outer circumferential surface of a rotational shaft 100, and a shell 2 arranged radially outward of the plurality of sliding contact pads 1. The plurality of sliding contact pads 1 are arranged around the rotational shaft 100. In the embodiment shown in FIG. 1, six sliding contact pads 1 are arranged, but five or fewer sliding contact pads 1, or seven or more sliding contact pads 1 may be arranged. In the following descriptions, "radial direction" means a radial direction of the plain bearing, and "axial direction" means a direction parallel to a central axis CL of the plain bearing and the rotational shaft 100.

The shell 2 in this embodiment is a single member that surrounds the plurality of sliding contact pads 1. In one embodiment, the shell 2 may be an assembly made up of a plurality of members. The shell 2 has a plurality of pad support surfaces 2a that support the plurality of sliding contact pads 1, respectively. The pad support surfaces 2a may be flat or curved. Outer surfaces of the plurality of sliding contact pads 1 are in contact with the plurality of pad support surfaces 2a, respectively.

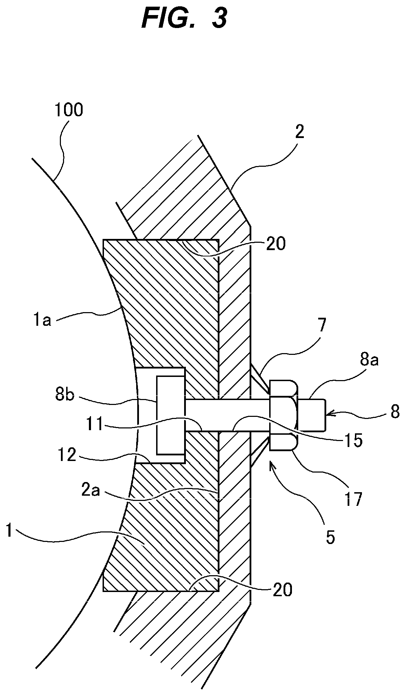

The plain bearing further includes a plurality of pad-pressing mechanisms 5 configured to press the plurality of sliding contact pads 1 against the plurality of pad support surfaces 2a of the shell 2, respectively. The plurality of pad-pressing mechanisms 5 are provided so as to correspond to the plurality of sliding contact pads 1, respectively. The pad-pressing mechanisms 5 have the same configuration. The pad-pressing mechanisms 5 will be described in detail below with reference to FIG. 3.

FIG. 3 is an enlarged cross-sectional view showing the sliding contact pad 1 and the pad-pressing mechanism 5. As shown in FIG. 3, the pad-pressing mechanism 5 includes a spring 7 as a biasing member configured to bias the sliding contact pad 1 toward the shell 2, and a bolt 8 as a pad supporting member supported by the shell 2. The sliding contact pad 1 is supported by the bolt 8. The bolt 8 is made of metal.

The bolt 8 extends in the radial direction of the plain bearing and extends through the sliding contact pad 1 and the shell 2 in the radial direction. More specifically, the sliding contact pad 1 has a through-hole 11 through which a threaded portion 8a of the bolt 8 passes, and further has a recess 12 in which a head 8b of the bolt 8 is located. The head 8b of the bolt 8 is in contact with a bottom of the recess 12. The recess 12 is formed in the shaft support surface 1a of the sliding contact pad 1. The bolt 8 has the threaded portion 8a that extends through a through-hole 15 formed in the pad support surface 2a of the shell 2. A nut 17 is screwed on and engaged with the threaded portion 8a of the bolt 8. The nut 17 is located outside the shell 2.

In this embodiment, the spring 7 serving as the biasing member is an annular disk spring. The disk spring has an advantages of a large spring constant and being compact. In another embodiment, the spring 7 may be a coil spring. The spring 7 is sandwiched between an outer surface of the shell 2 and the nut 17 on the bolt 8. The spring 7 biases the bolt (i.e., the pad supporting member) 8 and the sliding contact pad 1 toward the shell 2, thus pressing the sliding contact pad 1 against the pad support surface 2a of the shell 2.

The shell 2 has, in its inner surface, a plurality of guide walls 20 extending in the axial direction of the plain bearing. These guide walls 20 are located on both sides of the pad support surface 2a and face both side surfaces of the sliding contact pad 1. When the rotational shaft 100 rotates, the shaft support surface 1a of the sliding contact pad 1 comes into sliding contact with an outer circumferential surface of the rotational shaft 100. As a result, a frictional force acts on the sliding contact pad 1 in a rotating direction of the rotational shaft 100. The plurality of guide walls 20 arranged at both sides of the sliding contact pad 1 and the bolt 8 serving as the pad supporting member located at the center of the sliding contact pad 1 can maintain the posture of the sliding contact pad 1.

As can be seen in FIGS. 2 and 3, the bolt 8 serving as the pad supporting member is located at the center of the sliding contact pad 1. In one embodiment, a plurality of bolts (for example, two bolts) serving as the pad supporting member may be arranged along the central axis CL of the rotational shaft 100. The plurality of bolts can further stabilize the posture of the sliding contact pad 1. In another embodiment, a plurality of bolts serving as the pad supporting member may be arranged along the circumferential direction of the rotational shaft 100.

The sliding contact pad 1 and the shell 2 are made of different materials. A coefficient of linear expansion of the sliding contact pad 1 is higher than that of the shell 2. More specifically, the sliding contact pad 1 is made of a resin, such as PTFE (polytetrafluoroethylene) or PEEK (polyether ether ketone), and the shell 2 is made of a metal, such as stainless steel.

The plain bearing of this embodiment is expected to be used while immersed in liquefied gas, such as liquid hydrogen. Therefore, the plain bearing is required to operate stably at extremely low temperatures. When the sliding contact pad 1 and the shell 2 are cooled by the liquefied gas, the sliding contact pad 1 and the shell 2 contract. As described above, the sliding contact pad 1, which is made of resin, has a higher coefficient of linear expansion than that of the shell 2, which is made of metal, and therefore the sliding contact pad 1 contracts more than the shell 2.

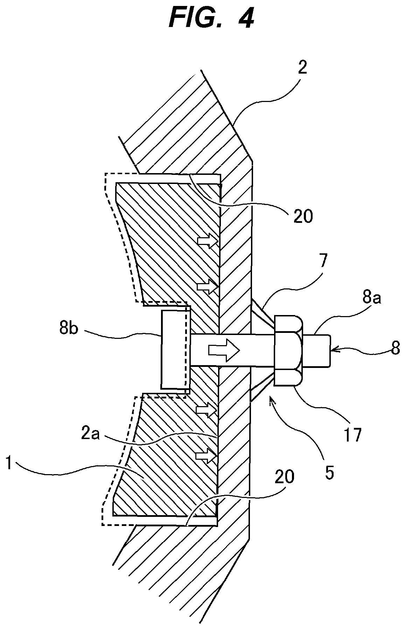

FIG. 4 is a diagram showing an example of a state in which the sliding contact pad 1 has contracted. When the sliding contact pad 1 contracts, a restoring force of the spring 7 pulls the bolt 8 radially outward, so that the sliding contact pad 1 is pressed by the bolt 8 against the pad support surface 2a of the shell 2. Therefore, the contracted sliding contact pad 1 is maintained in contact with the pad support surface 2a of the shell 2. As described above, according to this embodiment, the pad-pressing mechanism 5 is configured to further press the sliding contact pad 1 against the pad support surface 2a of the shell 2 as the sliding contact pad 1 contracts due to the contact with the cryogenic fluid (e.g., liquid hydrogen). As a result, the sliding contact pad 1 is firmly held on the shell 2, so that the plain bearing can maintain its stable operation even in a cryogenic environment.

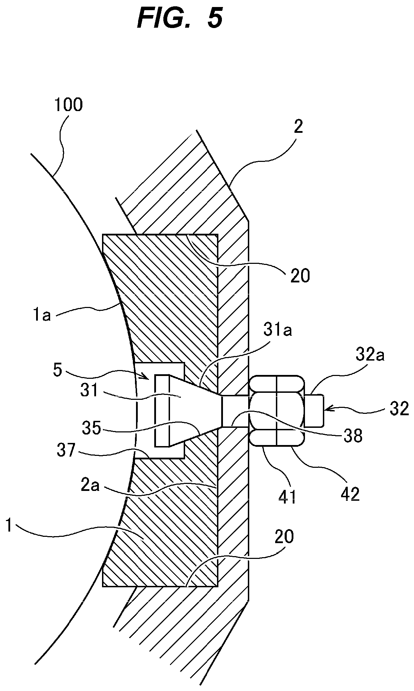

Next, another embodiment of the plain bearing will be described with reference to FIG. 5. Configurations and operations of this embodiment that will not be specifically described are the same as those of the embodiments described with reference to FIGS. 1 to 4, and therefore redundant description will be omitted. As shown in FIG. 5, the plain bearing includes a pad-pressing mechanism 5 located at the center of the sliding contact pad. Although not shown, a plurality of sliding contact pads 1 are arranged around the rotational shaft 100, as well as the embodiment shown in FIG. 1.

The pad-pressing mechanism 5 includes a pad supporting member 32 having a tapered shaft portion 31, and a tapered hole 35 formed in the sliding contact pad 1. The tapered shaft portion 31 is located inwardly of the shell 2. The pad supporting member 32 extends in the radial direction of the plain bearing and extends through the sliding contact pad 1 and the shell 2 in the radial direction. The sliding contact pad 1 is supported by the pad supporting member 32. More specifically, the sliding contact pad 1 is supported by the tapered shaft portion 31, and the tapered hole 35 is in surface contact with an outer circumferential surface 31a of the tapered shaft portion 31.

The sliding contact pad 1 has a recess 37 in which an end of the tapered shaft portion 31 of the pad supporting member 32 is located. The recess 37 is formed in the shaft support surface 1a of the sliding contact pad 1. The pad supporting member 32 is fixed to the shell 2. More specifically, the pad supporting member 32 has a threaded portion 32a that extends through a through-hole 38 formed in the pad support surface 2a. Double nuts 41, 42 are screwed on and engaged with the threaded portion 32a of the pad supporting member 32, thus fixing the radial position of the pad supporting member 32. The double nuts 41, 42 are located outside the shell 2. The mechanism for fixing the radial position of the pad supporting member 32 is not limited to the double nuts. For example, a single nut may be provided on the threaded portion 32a of the pad supporting member 32, and the single nut may be welded to the pad supporting member 32.

The pad supporting member 32 including the tapered shaft portion 31 is made of a material that has a lower coefficient of linear expansion than that of the sliding contact pad 1. For example, the pad supporting member 32 is made of metal. The outer circumferential surface 31a of the tapered shaft portion 31 and the tapered hole 35 have a truncated cone shape whose diameter gradually decreases along the radially outward direction (i.e., gradually decreases toward the shell 2). The outer circumferential surface 31a of the tapered shaft portion 31 is fitted in the tapered hole 35.

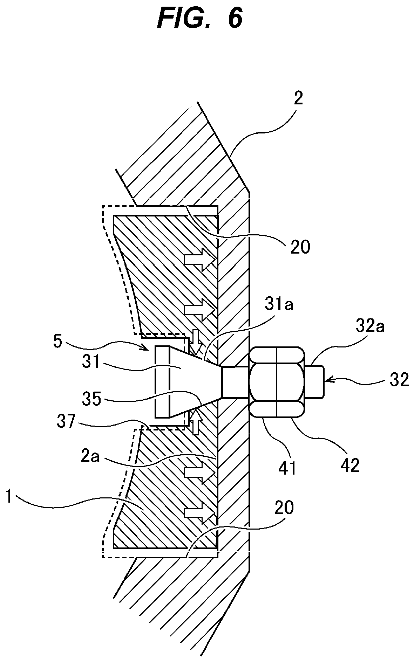

FIG. 6 is a diagram showing an example of a contracted state of the sliding contact pad 1. When the sliding contact pad 1 contracts due to contact with a cryogenic fluid (or an extremely low-temperature fluid), such as liquefied gas, the tapered hole 35 of the sliding contact pad 1 is pressed more strongly against the outer circumferential surface 31a of the tapered shaft portion 31 than at room temperature. The tapered hole 35 of the sliding contact pad 1 slides on the outer circumferential surface 31a of the tapered shaft portion 31, and a force acts on the sliding contact pad 1 to move the sliding contact pad 1 radially outward. As a result, the sliding contact pad 1 is pressed against the pad support surface 2a of the shell 2. Therefore, the contracted sliding contact pad 1 is kept in contact with the pad support surface 2a of the shell 2.

Thus, according to this embodiment, the pad-pressing mechanism 5 is configured to further press the sliding contact pad 1 against the pad support surface 2a of the shell 2 as the sliding contact pad 1 contracts due to the contact with the cryogenic fluid (e.g., liquid hydrogen). As a result, the sliding contact pad 1 is firmly held on the shell 2, so that the plain bearing can maintain its stable operation even in a cryogenic environment.

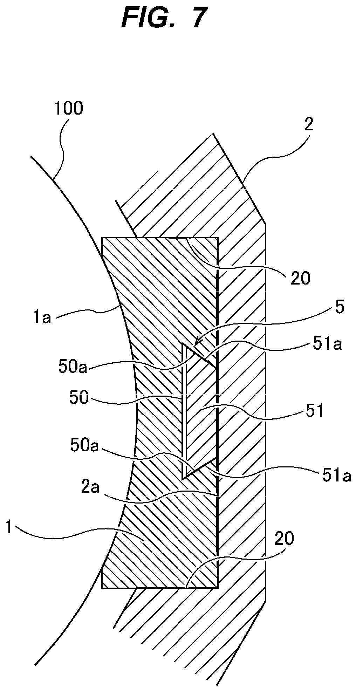

Next, still another embodiment of the plain bearing will be described with reference to FIG. 7. Configurations and operations of this embodiment that will not be specifically described are the same as those of the embodiments described with reference to FIGS. 1 to 4, and therefore redundant description will be omitted. As shown in FIG. 7, the plain bearing has a pad-pressing mechanism 5 extending in the axial direction. Although not shown, a plurality of sliding contact pads 1 are arranged around the rotational shaft 100, as well as the embodiment shown in FIG. 1.

The pad-pressing mechanism 5 includes a dovetail groove 50 formed in the sliding contact pad 1 and a pad holding rail 51 that fits in the dovetail groove 50. The dovetail groove 50 is formed in the outer surface of the sliding contact pad 1. The pad holding rail 51 has an inverted triangular cross-sectional shape that fits in the dovetail groove 50. The pad holding rail 51 is coupled to the pad support surface 2a of the shell 2 and extends in the axial direction on the pad support surface 2a. Examples of embodiment in which the pad holding rail 51 is coupled to the pad support surface 2a include an embodiment in which the pad holding rail 51 is fixed to the pad support surface 2a with screws or the like, and an embodiment in which the pad holding rail 51 and the shell 2 are integrally formed. The sliding contact pad 1 is held by the pad holding rail 51. The dovetail groove 50 has first tapered side surfaces 50a. The pad holding rail 51 has second tapered side surfaces 51a that are in surface contact with the first tapered side surfaces 50a of the dovetail groove 50.

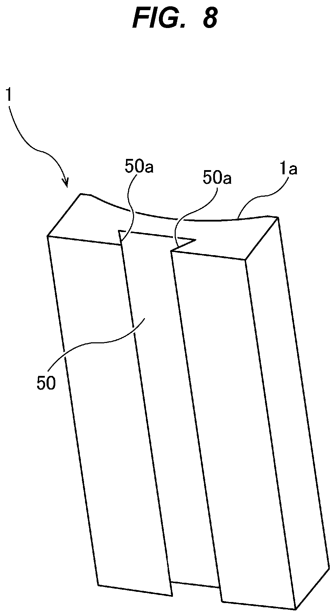

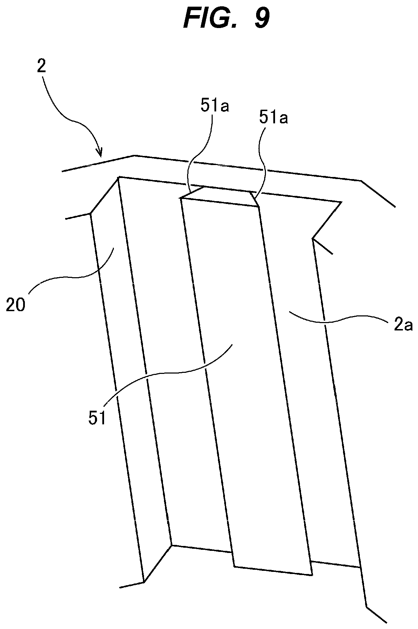

FIG. 8 is a perspective view showing an embodiment of the sliding contact pad 1, and FIG. 9 is a perspective view showing a part of an embodiment of the shell 2. As shown in FIGS. 8 and 9, the dovetail groove 50 and the pad holding rail 51 extend in the axial direction parallel to the central axis CL (see FIG. 2) of the plain bearing. The pad holding rail 51 is fixed to the shell 2 by screws (not shown). In one embodiment, the pad holding rail 51 and the shell 2 may be an integral structure.

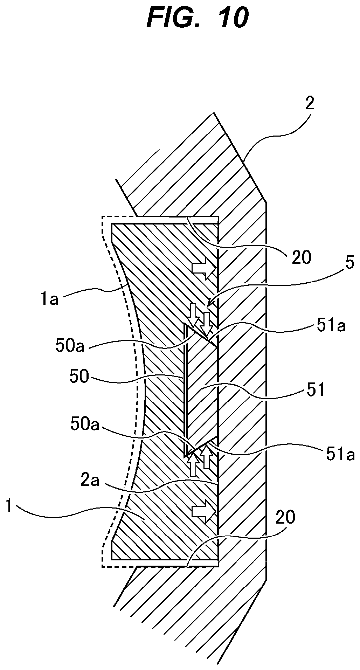

FIG. 10 is a diagram showing an example of a contracted state of the sliding contact pad 1. When the sliding contact pad 1 contracts due to contact with a cryogenic fluid (or an extremely low-temperature fluid), such as liquefied gas, the first tapered side surfaces 50a of the dovetail groove 50 are pressed more strongly against the second tapered side surfaces 51a of the pad holding rail 51 than at room temperature. The first tapered side surfaces 50a of the sliding contact pad 1 slide on the second tapered side surfaces 51a of the pad holding rail 51, and a force acts on the sliding contact pad 1 to move the sliding contact pad 1 radially outward. As a result, the sliding contact pad 1 is pressed against the pad support surface 2a of the shell 2. Therefore, the contracted sliding contact pad 1 is kept in contact with the pad support surface 2a of the shell 2.

The sliding contact pad 1 and the pad holding rail 51 are made of different materials. A coefficient of linear expansion of the sliding contact pad 1 is higher than that of the pad holding rail 51. In particular, in this embodiment, it is preferable to use a combination of materials such that the coefficient of linear expansion of the sliding contact pad 1 is higher than that of the pad holding rail 51 by 50% or more. For example, resin can be used for the sliding contact pad 1, and metal, such as stainless steel, can be used for the pad holding rail 51.

As described above, according to this embodiment, the pad-pressing mechanism 5 is configured to further press the sliding contact pad 1 against the pad support surface 2a of the shell 2 as the sliding contact pad 1 contracts due to contact with the cryogenic fluid (e.g., liquid hydrogen). As a result, the sliding contact pad 1 is firmly held on the shell 2, and the plain bearing can maintain its stable operation in a cryogenic environment. In particular, according to this embodiment, the shaft support surface 1a of the sliding contact pad 1 does not have a hole or recess for passing the pad supporting member 8, 32 therethrough, as in the previously described embodiments. As a result, an area of the shaft support surface 1a can be increased. Therefore, the sliding contact pad 1 is less likely to wear, and the plain bearing can stably support the rotational shaft 100.

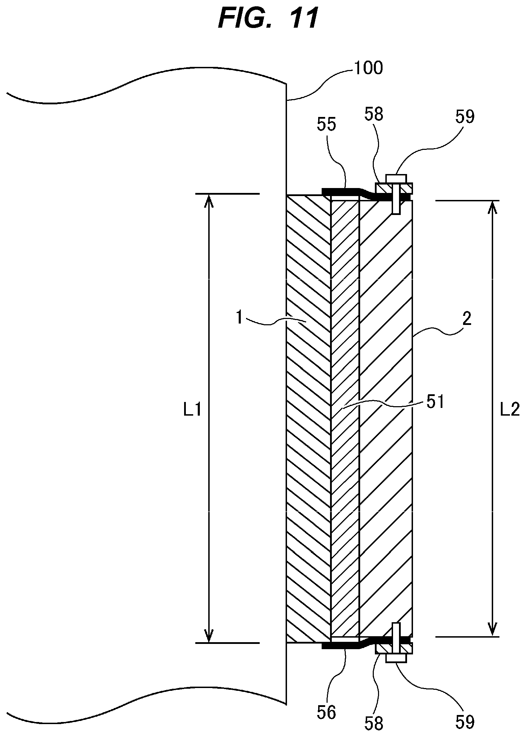

FIG. 11 is a vertical cross-sectional view of the embodiment of the plain bearing shown in FIG. 7. The plain bearing has an upper leaf spring 55 and a lower leaf spring 56 as biasing members that press the sliding contact pad 1 in the axial direction. The upper leaf spring 55 and the lower leaf spring 56 are in contact with an upper end and a lower end of the sliding contact pad 1, respectively. The upper leaf spring 55 and the lower leaf spring 56 are fixed to an upper end and a lower end of the shell 2 by retainers 58. The retainers 58 are fixed to the upper end and the lower end of the shell 2 by screws 59.

The upper leaf spring 55 and the lower leaf spring 56 have an annular shape and extend along the circumferential direction of the shell 2. The upper leaf spring 55 and the lower leaf spring 56 protrude radially inward from the shell 2 and contact the sliding contact pad 1. In one embodiment, each of the upper leaf spring 55 and the lower leaf spring 56 may not be annular, and may be composed of a plurality of leaf spring elements arranged along the circumferential direction of the shell 2.

An axial length L1 of the sliding contact pad 1 at room temperature is larger than an axial length L2 of the shell 2 at room temperature. Therefore, the sliding contact pad 1 is sandwiched between the upper leaf spring 55 and the lower leaf spring 56 fixed to the shell 2. The upper leaf spring 55 and the lower leaf spring 56 are configured to be able to bend elastically in the axial direction. With this configuration, the upper leaf spring 55 and the lower leaf spring 56 can maintain the axial position of the sliding contact pad 1, while allowing for a slight change in the axial position of the sliding contact pad 1.

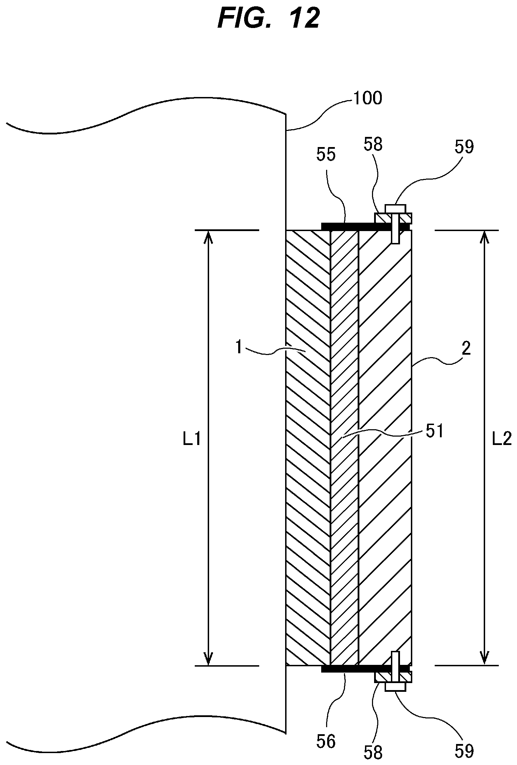

FIG. 12 is a diagram showing an example of a contracted state of the sliding contact pad 1. When the sliding contact pad 1 contracts due to contact with a cryogenic fluid, such as liquefied gas, the axial length L1 of the sliding contact pad 1 becomes close to the axial length L2 of the shell 2, while the sliding contact pad 1 is located between the upper leaf spring 55 and the lower leaf spring 56. Therefore, the axial position of the sliding contact pad 1 is maintained by the upper leaf spring 55 and the lower leaf spring 56. In other words, the upper leaf spring 55 and the lower leaf spring 56 can absorb the expansion and contraction of the sliding contact pad 1 that occurs due to temperature changes of the sliding contact pad 1.

The plain bearing of this embodiment can be assembled as follows. At room temperature, the dovetail groove 50 of the sliding contact pad 1 and the pad holding rail 51 of the shell 2 are assembled in a manner of clearance fitting. Specifically, first, at room temperature, the dovetail groove 50 of the sliding contact pad 1 is slid over the pad holding rail 51 of the shell 2 until the dovetail groove 50 of the sliding contact pad 1 is fitted onto the pad holding rail 51. Then, the upper leaf spring 55 and the lower leaf spring 56 are fixed to the shell 2 with the retainers 58 and the screws 59. The circumferential position of the sliding contact pad 1 is fixed by the engagement between the dovetail groove 50 and the pad holding rail 51, and the axial position of the sliding contact pad 1 is fixed by the upper leaf spring 55 and the lower leaf spring 56.

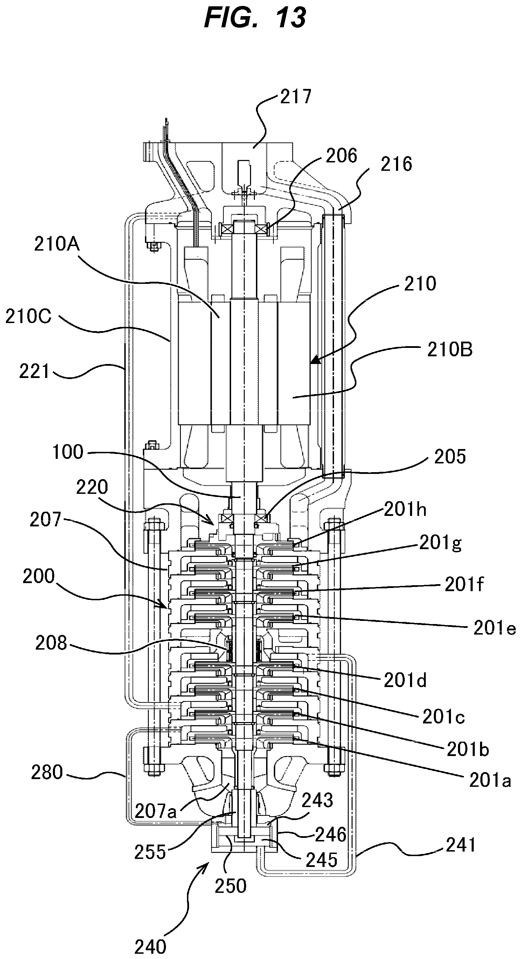

Next, a pump apparatus having any one of the embodiments of the plain bearing described with reference to FIGS. 1 to 12 will be described. FIG. 13 is a cross-sectional view showing an embodiment of a pump apparatus having the plain bearing. The pump apparatus has a pump 200 for delivering a liquid and an electric motor 210 that drives the pump 200. Examples of the liquid include cryogenic liquefied gases, such as liquefied ammonia, liquid hydrogen, liquid nitrogen, liquefied natural gas, liquefied ethylene gas, and liquefied petroleum gas. The pump apparatus of this embodiment described below is a centrifugal pump apparatus for pressurizing liquid hydrogen.

As shown in FIG. 13, the pump 200 includes rotational shaft 100, a plurality of impellers 201a to 201h fixed to the rotational shaft 100, bearings 205, 206 and plain bearing 208 that rotatably support the rotational shaft 100, and a pump casing 207 that houses the impellers 201a to 201h therein. The plain bearing 208 is any of the plain bearings of the embodiments described with reference to FIGS. 1 to 12. In other words, the embodiments described with reference to FIGS. 1 to 12 are applicable to the plain bearing 208.

The rotational shaft 100 extends in the vertical direction, and the multiple impellers 201a to 201h are fixed to the rotational shaft 100. The pump apparatus having the rotational shaft 100 that extends vertically is called a vertical pump apparatus. The multiple impellers 201a to 201h face the same direction (facing downward in this embodiment) and are arranged in series along the rotational shaft 100. The plain bearing 208 supports the rotational shaft 100 at a position between impellers 201d and 201e. The number of impellers 201a to 201h is not limited to this embodiment.

The pump apparatus further includes the electric motor 210 configured to rotate the rotational shaft 100. The electric motor 210 includes a motor rotor 210A fixed to the rotational shaft 100, a motor stator 210B that surrounds the motor rotor 210A, and a motor housing 210C that houses the motor stator 210B therein. The motor housing 210C is fixed to the pump casing 207.

The electric motor 210 is configured to be able to rotate the rotational shaft 100 and the impellers 201a-201h together. In this embodiment, the electric motor 210 is an immersible motor configured to be able to contact liquid hydrogen. Specifically, while the pump apparatus is in operation, the motor rotor 210A and the motor stator 210B are immersed in the liquid hydrogen and are cooled by the liquid hydrogen. In one embodiment, at least one of the motor rotor 210A and the motor stator 210B may have a sealed structure that does not allow liquid to enter.

The pump apparatus is disposed in a suction container (not shown), which is filled with liquid hydrogen. Therefore, the pump 200 and the electric motor 210 are operated while the entireties of the pump 200 and the electric motor 210 are immersed in the liquid hydrogen.

The bearings 205 and 206 are disposed above and below the electric motor 210. In this embodiment, the bearings 205 and 206 are ball bearings capable of supporting both radial load and axial load. In one embodiment, either the bearing 205 or 206 may be a plain bearing according to any of the above-described embodiments. During operation of the pump apparatus, the bearings 205 and 206 and the plain bearing 208 are immersed in the liquid hydrogen and are lubricated and cooled by the liquid hydrogen.

The pump casing 207 has an inlet 207a for the liquid hydrogen. When the electric motor 210 rotates the impellers 201a to 201h, the liquid hydrogen in the suction container flows into the pump casing 207 through the inlet 207a. The liquid hydrogen is pressurized in the pump casing 207 as the impellers 201a to 201h rotate. The pressurized liquid hydrogen is discharged from the pump apparatus through a discharge passage 216 and an outlet 217. The discharge passage 216 is formed in the pump casing 207 and the motor housing 210C. The outlet 217 is formed in the motor housing 210C. A part of the pressurized liquid hydrogen comes into contact with the bearings 205, 206, the plain bearing 208, and the electric motor 210.

The pump apparatus further includes a first thrust balance mechanism 220 and a second thrust balance mechanism 240 that cancel out a weight of a rotating element including at least the rotational shaft 100 and the plurality of impellers 201a-201h and an axial thrust acting on the plurality of impellers 201a-201h. The first thrust balance mechanism 220 is disposed at a discharge side of the plurality of impellers 201a-201h. More specifically, the first thrust balance mechanism 220 is disposed between the final-stage impeller 201h and the electric motor 210. A part of the liquid hydrogen pressurized by the rotation of the plurality of impellers 201a-201h flows through the first thrust balance mechanism 220 and contacts the bearings 205, 206 and the electric motor 210, thereby cooling the bearings 205, 206 and the electric motor 210. The liquid hydrogen is returned from the electric motor 210 through a communication line 221 to a low-pressure side of the pump casing 207.

One end of the communication line 221 is coupled to the motor housing 210C of the electric motor 210 and communicates with the interior of the motor housing 210C. The other end of communication line 221 is coupled to the pump casing 207 and communicates with a low-pressure region in the pump casing 207. More specifically, the other end of communication line 221 communicates with the interior of the pump casing 207 at a position between the first-stage impeller 201a and the final-stage impeller 201h. Therefore, the communication line 221 communicates with a discharge side of any one of impellers 201a to 201h.

The coupling position of the communication line 221 and the pump casing 207 is determined appropriately based on factors, such as the weight of the rotating element (including the rotational shaft 100 and the impellers 201a to 201h). In this embodiment, if the multiple impellers 201a to 201h are divided into a low-pressure group of impellers 201a to 201d including the first-stage impeller 201a and a high-pressure group of impellers 201e to 201h including the final-stage impeller 201h, the communication line 221 communicates with the interior of the pump casing 207 at the position of the low-pressure group.

The liquid hydrogen in the motor housing 210C is returned to the pump casing 207 through the communication line 221. Therefore, the pressure of the liquid hydrogen in the motor housing 210C is substantially the same as the pressure in the low-pressure side of the pump casing 207. In this embodiment, the communication line 221 communicates with the interior of the pump casing 207 at the position of the second-stage impeller 2b (i.e., communicates with the discharge side of the impeller 2b), but the communication line 221 may communicate with the interior of the pump casing 207 at the position of another stage of impeller.

In one embodiment, the communication line 221 may communicate with an interior of the suction container (i.e., an exterior of the pump 200) without being coupled to the pump casing 207. In this case, the pressure of liquid hydrogen in the motor housing 210C is substantially the same as the pressure in the suction side of impeller 201a (i.e., the pressure before being increased by the impellers 201a to 201h).

The second thrust balance mechanism 240 includes a wall structure 246 having a low-pressure chamber 243 and a high-pressure chamber 245 therein, and a partition wall 250 disposed within the wall structure 246 and located between the low-pressure chamber 243 and the high-pressure chamber 245. The partition wall 250 is coupled to the rotational shaft 100. The high-pressure chamber 245 is located below the low-pressure chamber 243. The names of the low-pressure chamber 243 and the high-pressure chamber 245 mean that the pressure in the low-pressure chamber 243 is lower than the pressure in the high-pressure chamber 245, and do not mean that the pressure in the low-pressure chamber 243 is lower than a specific pressure, and that the pressure in the high-pressure chamber 245 is higher than a specific pressure.

One end of an intermediate communication line 241 is coupled to the wall structure 246 and communicates with the high-pressure chamber 245. The other end of the intermediate communication line 241 is coupled to the discharge side of one of the multiple impellers 201a to 201h. More specifically, the other end of the intermediate communication line 241 is coupled to the pump casing 207 at a position of the discharge side of one of the multiple impellers 201a to 201h and communicates with the interior of the pump casing 207. In this embodiment, the high-pressure chamber 245 is coupled to the discharge side of the intermediate-stage impeller 201d through the intermediate communication line 241. Specifically, the other end of the intermediate communication line 241 is coupled to the interior of the pump casing 207 at a position of the discharge side of the impeller 201d. In one embodiment, the other end of the intermediate communication line 241 may be coupled to the discharge side of the impeller of another stage as the intermediate-stage impeller.

One end of a return line 280 is coupled to the wall structure 246 and communicates with the low-pressure chamber 243. The other end of the return line 280 is coupled to the pump casing 207 at a position of the discharge side of the first-stage impeller 201a, which is a suction-side impeller located upstream of the intermediate-stage impeller 201d, and communicates with the interior of the pump casing 207. Therefore, the return line 280 provides fluid communication between the discharge side of the first-stage impeller 201a (which is a suction-side impeller) and the low-pressure chamber 243. In one embodiment, the suction-side impeller may be an impeller other than the first-stage impeller 201a (e.g., second-stage impeller 201b), as long as the suction-side impeller is located upstream of the intermediate-stage impeller 201d.

The partition wall 250 has a shape of piston and is fixed to a lower end of the rotational shaft 100. The partition wall 250 rotates together with the rotational shaft 100 within the structure 246 and is capable of moving in the axial direction together with the rotational shaft 100. The wall structure 246 has an inner circumferential surface parallel to the axial direction of the rotational shaft 100, and the partition wall 250 has an outer circumferential surface parallel to the axial direction of the rotational shaft 100. The entire outer circumferential surface of the partition wall 250 is surrounded by the inner circumferential surface of the wall structure 246 with a gap therebetween. The partition wall 250 is capable of moving in the axial direction within the wall structure 246 in accordance with the axial movement of the rotational shaft 100.

There is the radial gap between the outer circumferential surface of the partition wall 250 and the inner circumferential surface of the wall structure 246. The magnitude of this radial gap is constant regardless of the axial position of the rotational shaft 100. The second thrust balance mechanism 240 of this embodiment is a fixed-gap type in which the magnitude of the radial gap does not change regardless of the axial position of the rotational shaft 100. This fixed-gap type may be called a fixed-orifice type.

The liquid hydrogen filling the high-pressure chamber 245 moves to the low-pressure chamber 243 through the radial gap between the outer circumferential surface of the partition wall 250 and the inner circumferential surface of the wall structure 246. The liquid hydrogen flows from the low-pressure chamber 243 through the return line 280 into the interior of the pump casing 207. In order to control a flow rate of the liquid hydrogen passing through the radial gap, a groove (e.g., axial groove, spiral groove, circumferential groove, etc.) may be provided on at least one of the inner and outer circumferential surfaces.

The pressure in the low-pressure chamber 243 is substantially equal to the pressure in the discharge side of the impeller 201a. Therefore, the partition wall 250 receives an upward force corresponding to a difference between the pressure in the high-pressure chamber 245 and the pressure in the low-pressure chamber 243. This upward force is generated by the second thrust balance mechanism 240 and acts against the weight of the rotating element (including at least the rotational shaft 100 and the impellers 201a to 201h) and the axial thrust acting on the impellers 201a to 201h. The upward force generated by the second thrust balance mechanism 240 is determined by the difference between the pressure in the high-pressure chamber 245 and the pressure in the low-pressure chamber 243, and does not change depending on the axial position of the rotational shaft 100.

The combination of the upward force generated by the first thrust balance mechanism 220 and the upward force generated by the second thrust balance mechanism 240 can cancel out the weight of the rotating element (including at least the rotational shaft 100 and the impellers 201a to 201h) and the axial thrust acting on the impellers 201a to 201h. Therefore, the axial thrust acting on the bearings 205, 206 becomes substantially zero, and the service life of the bearings 205, 206 can be extended.

The return line 280 provides the fluid communication between the discharge side of the first-stage impeller 201a (which is the suction-side impeller) and the low-pressure chamber 243. Therefore, during operation of the pump apparatus, the pressure in the low-pressure chamber 243 is substantially the same as the pressure in the discharge side of the first-stage impeller 201a. Specifically, the pressure in the low-pressure chamber 243 is substantially the same as the pressure increased by the first-stage impeller 201a. When the liquid hydrogen moves from the high-pressure chamber 245 through the radial gap to the low-pressure chamber 243, the pressure of the liquid hydrogen decreases. However, since the pressure in the low-pressure chamber 243 is substantially the same as the pressure increased by the first-stage impeller 201a, the liquid hydrogen is unlikely to vaporize. The liquid hydrogen returned from the low-pressure chamber 243 through the return line 280 to the pump casing 207 does not contain any bubbles, thus allowing the pump apparatus to perform its intended pumping performance and preventing vibrations caused by intake of bubbles.

When the liquid hydrogen filling the high-pressure chamber 245 moves through the radial gap to the low-pressure chamber 243, the liquid hydrogen forms a liquid film in the radial gap. This liquid film functions as a bearing that supports the rotating element including the rotational shaft 100 and the multiple impellers 201a-201h, thereby contributing to improving the stability of the rotating element. This bearing function of the second thrust balance mechanism 240 is particularly advantageous for the multi-stage pump apparatus having multiple impellers. Specifically, the multi-stage pump apparatus having multiple impellers has a long shaft length and has an increased number of whirling elements, which can cause problems with the stability of the rotating element including the multiple impellers. The liquid film formed in the radial gap can improve the stability of the rotating element.

The density of liquid hydrogen is approximately one-sixth the density of liquefied natural gas. When the pump apparatus handles such liquid hydrogen, it is difficult for the first thrust balance mechanism 220 alone to generate a sufficient upward force to bear the rotating element. According to this embodiment, the first thrust balance mechanism 220 and the second thrust balance mechanism 240 can generate the upward forces large enough to bear the weight and the axial thrust of the rotating element. In particular, by appropriately setting the coupling position of the intermediate communication line 241 and the pump casing 207, the second thrust balance mechanism 240 can generate an optimal upward force.

The second thrust balance mechanism 240 forms a liquid-hydrogen loop that is completely independent of that of the first thrust balance mechanism 220. In other words, the pressure in the high-pressure chamber 245 of the second thrust balance mechanism 240 corresponds to the pressure of the discharge side of the intermediate-stage impeller among the multiple impellers 201a to 201h. The pressure in the high-pressure chamber 245 varies depending on the coupling position of the intermediate communication line 241 and the pump casing 207. Therefore, the appropriate coupling position of the intermediate communication line 241 and the pump casing 207 is determined based on the weight of the rotating element and the upward force required to counteract the axial thrust acting on the impellers 201a to 201h.

As shown in FIG. 13, a plain bearing 255 may be provided above the second thrust balance mechanism 240. In the embodiment shown in FIG. 13, the plain bearing 255 is located above the second thrust balance mechanism 240 and below the impellers 201a to 201h.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments. Therefore, the present invention is not intended to be limited to the embodiments described herein but is to be accorded the widest scope as defined by limitation of the claims.

### Industrial Applicability

The present invention is applicable to a plain bearing for use in a rotary machine, such as pump or turbine, and more particularly to a plain bearing for use in a cryogenic environment. The present invention is further applicable to a pump apparatus having such a plain bearing.

### Reference Signs List

- 1: sliding contact pad
- 1a: shaft support surface
- 2: shell
- 2a: pad support surface
- 5: pad pressing mechanism
- 7: spring
- 8: bolt (pad supporting member)
- 8a: threaded portion
- 8b: head
- 11: through-hole
- 12: recess
- 15: through-hole
- 17: nut
- 20: guide wall
- 31: tapered shaft portion
- 31a: outer circumferential surface
- 32: pad supporting member
- 32a: threaded portion
- 35: tapered hole
- 37: recess
- 38: through-hole
- 41,42: nut
- 50: dovetail groove
- 50a: first tapered side surface
- 51: pad holding rail
- 51a: second tapered side surface
- 55: upper leaf spring
- 56: lower leaf spring
- 58: retainer
- 59: screw
- 100: rotational shaft

## Claims

1. A plain bearing for supporting a rotational shaft, comprising:
a sliding contact pad having a shaft support surface configured to support an outer circumferential surface of the rotational shaft;
a shell arranged radially outward of the sliding contact pad; and
a pad-pressing mechanism configured to press the sliding contact pad against the pad support surface of the shell when the sliding contact pad contracts.

2. The plain bearing according to claim 1, wherein the pad-pressing mechanism includes a biasing member that biases the sliding contact pad toward the shell.

3. The plain bearing according to claim 2, wherein the pad-pressing mechanism further includes a pad supporting member supported by the shell,
the sliding contact pad is supported by the pad supporting member, and
the biasing member biases the sliding contact pad and the pad supporting member toward the shell to press the sliding contact pad against the pad support surface of the shell.

4. The plain bearing according to claim 1, wherein the pad-pressing mechanism comprises:
a pad supporting member fixed to the shell and having a tapered shaft portion; and
a tapered hole formed in the sliding contact pad,
wherein the sliding contact pad is supported by the tapered shaft portion, and the tapered hole is in surface contact with an outer circumferential surface of the tapered shaft portion.

5. The plain bearing according to claim 1, wherein the pad-pressing mechanism includes:
a dovetail groove formed in the sliding contact pad; and
a pad holding rail coupled to the pad support surface of the shell, the pad holding rail having an inverted triangular cross-sectional shape that fits in the dovetail groove.

6. The plain bearing according to claim 5, wherein the dovetail groove and the pad retaining rail extend in an axial direction parallel to a central axis of the plain bearing.

7. The plain bearing according to claim 6, further comprising a biasing member that presses the sliding contact pad in the axial direction.

8. A pump apparatus comprising:
a rotational shaft;
an electric motor configured to rotate the rotational shaft;
an impeller fixed to the rotational shaft;
a pump casing that houses the impeller therein; and
a plain bearing according to any one of claims 1 to 7 configured to rotatably support the rotational shaft.
